(19) Europäisches Patentamt
European Patent Office
Office européen des brevets

(11) **EP 3 125 077 A1**

(12) **DEMANDE DE BREVET EUROPEEN**

(43) Date de publication:
01.02.2017 Bulletin 2017/05

(21) Numéro de dépôt: 16182039.4

(22) Date de dépôt: 29.07.2016

(51) Int Cl.:
*G06F 3/01* (2006.01)        *G06F 3/16* (2006.01)
*B60K 35/00* (2006.01)       *B60K 37/06* (2006.01)
*B60W 50/16* (2012.01)

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
MA MD

(30) Priorité: 29.07.2015 FR 1557272

(71) Demandeur: DAV
94046 Créteil Cedex (FR)

(72) Inventeur: VANHELLE, Stéphane
94046 Créteil CEDEX (FR)

(74) Mandataire: Delplanque, Arnaud
VALEO Comfort and Driving Assistance
76, rue Auguste Perret
Z.I. Europarc
94046 Créteil Cedex (FR)

(54) **PROCÉDÉ ET INTERFACE DE COMMANDE À RETOUR HAPTIQUE POUR VÉHICULE AUTOMOBILE**

(57) L'invention concerne une interface de commande (1) à retour haptique pour véhicule automobile comportant un élément de commande (2), et une unité de retour haptique (3) configurée pour faire vibrer l'élément de commande (2) en réponse à un contact de l'élément de commande (2), caractérisée en ce que l'unité de retour haptique (3) est configurée pour générer au moins trois fréquences successivement, ou une fréquence du retour haptique générée par l'unité de retour haptique (3) est associée à au moins deux fréquences d'un retour sonore émises par une unité de retour sonore (4) de l'interface de commande (1), ou à au moins une autre fréquence du retour haptique générée par l'unité de retour haptique (3) et à au moins une fréquence d'un retour sonore émise par une unité de retour sonore (4) de l'interface de commande (1), de manière que l'ensemble des au moins trois fréquences définisse un accord musical.

L'invention concerne également un procédé de commande d'une interface de commande (1) à retour haptique

Fig.1

EP 3 125 077 A1

**Description**

La présente invention concerne une interface de commande pour véhicule automobile permettant de transmettre un retour haptique à un utilisateur pour l'informer de la prise en compte d'une commande. L'invention concerne également un procédé de commande de ladite interface de commande à retour haptique.

Les véhicules automobiles sont devenus plus faciles à manipuler avec l'apparition de nouvelles technologies telles que la direction assistée, ABS, régulateur de vitesse, radar de recul etc.... Paradoxalement toutefois, le nombre de fonctions à contrôler pendant la conduite a lui aussi beaucoup augmenté. Ceci peut induire une certaine complexité liée à la mauvaise connaissance de l'utilisation de ces fonctionnalités et à leur diversité. La voiture est devenue un véritable espace de vie, perçue comme un centre de communication personnel et interconnecté : avec par exemple le lecteur MP3, le GPS, la connexion avec les téléphones portables.

L'introduction de ces nouvelles fonctions se traduit par une augmentation du nombre de boutons sur le tableau de bord d'un cockpit de voiture. Cependant, le nombre de boutons ne peut pas être augmenté à l'infini, du fait notamment de la complexité engendrée, de l'espace limité, de l'accessibilité ou de la charge cognitive. De plus, l'interaction du conducteur avec les systèmes embarqués dans la voiture peut reproduire une situation de surcharge attentionnelle dans laquelle le conducteur peut ne pas traiter au mieux toutes les informations de la tâche de conduite, se traduisant par des erreurs et un temps de détection plus long.

Une possibilité est de centraliser les boutons en les remplaçant par des interfaces tactiles type écran ou pavé tactile. Ceci permet de continuer à augmenter le nombre des fonctions, celles-ci devenant programmables et reconfigurables et exposées de façon temporaire ou permanente selon le contexte ou la fonction activée.

Cependant, contrairement au cas d'un bouton mécanique, le conducteur ne reçoit aucune rétroaction liée directement à son action sur l'interface lorsqu'il interagit avec l'interface autre que le simple contact de l'interface.

Afin de compenser la perte d'informations causée par la substitution d'interfaces mécaniques classiques par des interfaces tactiles, il est prévu l'ajout d'un retour haptique, pour fournir une rétroaction du système à l'utilisateur. Ce retour permet d'éviter l'ambiguïté possible de la prise en compte de l'action de l'utilisateur par le système, susceptible de favoriser l'apparition de situations dangereuses.

Un but de la présente invention est de fournir une interface de commande qui ne gêne pas la conduite et qui soit bien perçu et apprécié par les utilisateurs.

Afin de résoudre au moins en partie cet inconvénient, la présente invention a pour objet une interface de commande à retour haptique pour véhicule automobile comportant :

- un élément de commande, et
- une unité de retour haptique configurée pour faire vibrer l'élément de commande en réponse à un contact de l'élément de commande,

caractérisée en ce que :

- l'unité de retour haptique est configurée pour générer au moins trois fréquences successivement, ou
- une fréquence du retour haptique générée par l'unité de retour haptique est associée :

  - à au moins deux fréquences d'un retour sonore émises par une unité de retour sonore de l'interface de commande, ou
  - à au moins une autre fréquence du retour haptique générée par l'unité de retour haptique et à au moins une fréquence d'un retour sonore émise par une unité de retour sonore de l'interface de commande,

de manière que l'ensemble des au moins trois fréquences définisse un accord musical.

La au moins une fréquence émise par l'unité de retour haptique est alors perçue comme une des au moins trois notes d'un accord musical. Le signal audiohaptique résultant est perçu par l'utilisateur comme un tout cohérent et harmonieux. Le profil musical peut en outre imiter le bruit d'un bouton existant ou générer des profils cohérents avec la fonction demandée ou au contexte ou aux préférences de l'utilisateur.

Selon une ou plusieurs caractéristiques de l'interface de commande, prise seule ou en combinaison :

- les au moins trois fréquences sont émises simultanément,
- les au moins trois fréquences sont émises séquentiellement,
- les fréquences de l'accord musical définissent une note fondamentale, une tierce et une quinte,
- un premier rapport entre deux fréquences est compris entre 1,1 et 1,3,
- un deuxième rapport entre deux fréquences est compris entre 1,4 et 1,6,
- l'élément de commande est un écran tactile ou un pavé tactile.

L'invention a aussi pour objet un procédé de commande d'une interface de commande à retour haptique pour véhicule automobile comportant un élément de commande qui vibre en réponse à un contact de l'élément de commande, caractérisé en ce que :

- on fait vibrer l'élément de commande selon au moins trois fréquences successives, ou
- on fait vibrer l'élément de commande selon une fréquence associée à au moins deux fréquences d'un retour sonore émises par une unité de retour sonore de l'interface de commande, ou

- on fait vibrer l'élément de commande selon au moins deux fréquences associées à au moins une fréquence d'un retour sonore émise par une unité de retour sonore de l'interface de commande,

de manière que l'ensemble des au moins trois fréquences définisse un accord musical.

D'autres caractéristiques et avantages de l'invention ressortiront de la description suivante, donnée à titre d'exemple et sans caractère limitatif, en regard des dessins annexés sur lesquels :

- la figure 1 représente une vue schématique d'un exemple de réalisation d'une interface de commande à retour haptique, et
- la figure 2 montre un tableau des fréquences des notes dans l'octave du *la* de référence, (octave 3).

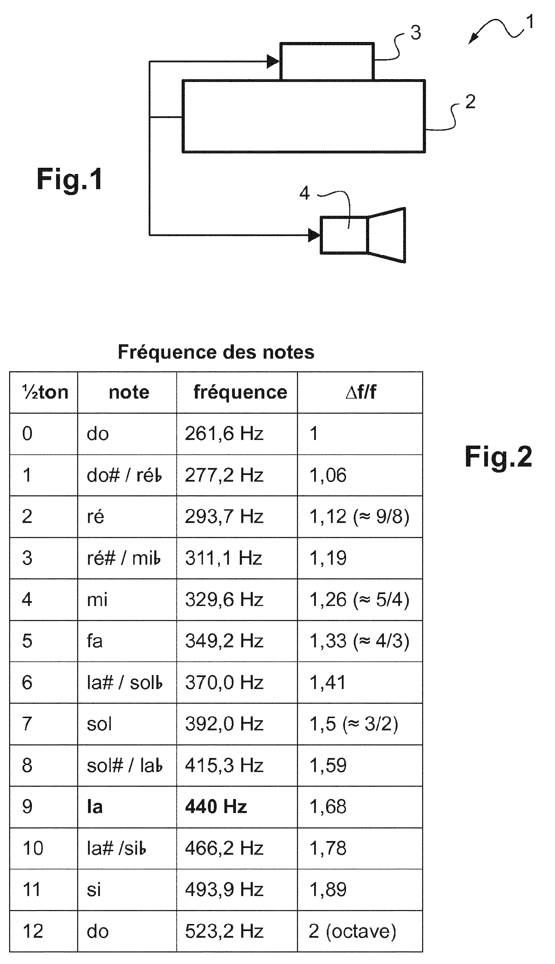

La figure 1 représente une interface de commande 1 à retour haptique. L'interface de commande 1 à retour haptique est destinée à être montée dans un véhicule automobile, par exemple dans le tableau de bord ou dans une console centrale du véhicule, pour commander des systèmes embarqués du véhicule tels que le système de climatisation, de radio, du téléphone, de ventilation ou de navigation.

L'interface de commande 1 comporte un élément de commande 2 et une unité de retour haptique 3.

L'élément de commande 2 comporte un capteur de contact, tel qu'un capteur capacitif ou résistif, pour détecter un contact d'un utilisateur, tel qu'un appui ou un déplacement du doigt ou tout autre moyen d'activation (par exemple un stylet).

Le capteur de contact de l'élément de commande 2 est relié à l'unité de retour haptique 3. L'unité de retour haptique 3 est en outre configurée pour faire vibrer l'élément de commande 2 en réponse à un contact de l'élément de commande 2.

De manière générale, un contact sur l'élément de commande 2 permet notamment à un utilisateur de sélectionner ou d'activer une fonction, telle qu'une fonction du système de climatisation, de navigation, de l'autoradio ou le défilement et la sélection d'un choix parmi une liste, telle qu'une liste téléphonique.

L'élément de commande 2 est par exemple un écran tactile ou un pavé tactile (ou « Touchpad » en anglais) ou une touche (ou « Push » en anglais). Il présente alors une surface plane. Selon un autre exemple, l'élément de commande 2 est un bouton rotatif ou une touche de type bouton poussoir (ou « Push » en anglais) ou un curseur déplaçable linéairement. Il présente alors une forme tridimensionnelle.

La vibration de l'élément de commande 2 permet de fournir un retour haptique à l'utilisateur qui manipule l'interface de commande 1. Le retour est dit « haptique », car il est perceptible par le toucher de l'élément de commande 2.

Pour cela, l'unité de retour haptique 3 comporte un actionneur vibratoire.

L'actionneur vibratoire est par exemple de type ERM (pour « Eccentric Rotating-Mass » en anglais) également appelé « moteur vibrant » ou moteur à masselotte. Selon un autre exemple, l'actionneur vibratoire est de type électromagnétique. Il repose par exemple sur une technologie similaire à celle du Haut-Parleur (en anglais : « Voice-Coil »). L'actionneur vibratoire est par exemple un LRA (pour « Linear Resonant Actuator » en anglais), également appelé « moteur linéaire ». Selon un autre exemple, l'actionneur vibratoire est de type piézoélectrique.

Selon un premier exemple de réalisation, l'unité de retour haptique 3 est configurée pour générer au moins trois fréquences successivement, de manière que l'ensemble des au moins trois fréquences définisse un accord musical.

Selon un deuxième exemple de réalisation, l'interface de commande 1 comporte également une unité de retour sonore 4.

Le capteur de contact de l'élément de commande 2 est relié à l'unité de retour sonore 4. L'unité de retour sonore 4 est configurée pour générer un retour sonore en réponse à un contact de l'élément de commande 2.

On prévoit en outre qu'une fréquence du retour haptique générée par l'unité de retour haptique 3 soit associée à :

- au moins deux fréquences du retour sonore émises par l'unité de retour sonore 4, ou
- à au moins une autre fréquence du retour haptique générée par l'unité de retour haptique 3 et à au moins une fréquence du retour sonore émise par l'unité de retour sonore 4,

de manière que l'ensemble des au moins trois fréquences définisse un accord musical.

Les au moins trois fréquences peuvent être émises séquentiellement (déroulé de notes) ou simultanément lorsqu'il n'y a qu'une fréquence qui est émise par l'unité de retour haptique 3.

Lorsque les fréquences sont émises séquentiellement, celles-ci peuvent être déroulées en mode croissant, tel que *do mi sol,* ou en mode décroissant, tel que *sol mi do,* ou en mode croissant/décroissant, tel que *do mi sol mi do,* ou en mode aléatoire tel que *sol do mi.*

La au moins une fréquence émise par l'unité de retour haptique est alors perçue comme une des au moins trois notes d'un accord musical. Le signal audio-haptique résultant est perçu par l'utilisateur comme un tout cohérent et harmonieux. Le profil musical peut en outre imiter le bruit d'un bouton existant ou générer des profils cohérents avec la fonction demandée ou au contexte ou aux préférences de l'utilisateur.

En harmonie tonale, un accord musical est formé de trois ou quatre notes.

Un accord musical de trois notes comporte une fondamentale, une tierce qui peut être mineure (trois demi-tons) ou majeure (quatre demi-tons) et une quinte.

Par exemple : *do* est la fondamentale, *mi* est la tierce et *sol* est la quinte.

Une fréquence du retour haptique émise par l'unité de retour haptique 3 peut être la fondamentale, la tierce ou la quinte, les deux autres notes étant générées par deux autres fréquences du retour haptique émises par l'unité de retour haptique 3 ou par deux fréquences du retour sonore émises par l'unité de retour sonore 4 ou par au moins une fréquence du retour haptique émise par l'unité de retour haptique 3 et au moins une fréquence du retour sonore émise par l'unité de retour sonore 4.

Lorsque l'accord est une superposition de tierces, l'accord est identifié par le nom de la note correspondant au plus grand intervalle avec la fondamentale. Ce peut donc être un accord quinte, septième ...

L'accord musical peut être un accord parfait majeur, par exemple pour valider positivement la prise en compte d'une commande de l'utilisateur.

L'accord parfait majeur comporte alors une fondamentale, une tierce majeure et une quinte juste. Par exemple : *do, mi, sol* est un accord parfait de *do* majeur.

La tierce majeure est l'intervalle séparant deux notes dont les fréquences sont dans le rapport 5/4. Si l'on définit une note fondamentale *do* à 528Hz, sa tierce majeure supérieure *mi* a une fréquence de 660Hz, soit un rapport de 1,25 avec la fondamentale.

Il en est de même pour une octave au-dessus ou au-dessous, pour laquelle on multiplie ou on divise approximativement les fréquences par deux. Ainsi, si l'on définit une note fondamentale *do* à 261,6Hz, sa tierce majeure supérieure *mi a* une fréquence de 329,6Hz, soit un rapport de 1,26, de l'ordre de 5/4.

Un premier rapport entre deux fréquences vibratoire et/ou sonore est ainsi compris entre 1,1 et 1,3, de l'ordre de 5/4.

La quinte est l'intervalle séparant deux notes dont les fréquences sont dans le rapport 3/2. Si l'on définit une note fondamentale *do* à 261,6Hz, la quinte *sol* a une fréquence de 392Hz, soit un rapport de l'ordre 1,5 (ou 3/2) avec la fondamentale.

Un deuxième rapport entre deux fréquences vibratoire et/ou sonore est ainsi compris entre 1,4 et 1,6, tel que 3/2.

L'accord musical peut être un accord parfait mineur. Il comporte alors une fondamentale, une tierce mineure et une quinte juste. Par exemple : *do, mi^b, sol* est un accord parfait de *do* mineur. La tierce mineure est l'intervalle d'un ton et demi séparant deux notes dont les fréquences fondamentales sont en rapport 6/5 (ou 1,2). Si l'on définit une note *do* à 528Hz, sa tierce mineure supérieure *mi^b* a une fréquence de 633.6Hz. Le rapport entre la fréquence de la fondamentale et la tierce mineure est ainsi compris entre 1,1 et 1,3.

Il en est de même pour une octave au-dessus ou au-dessous, pour laquelle on multiplie ou on divise approximativement les fréquences par deux. Ainsi, si l'on définit une note fondamentale *do* à 261,6Hz, sa tierce mineure *mi^b* a une fréquence de 311,1 Hz, soit un rapport de l'ordre de 1,19, de l'ordre de 6/5.

Un accord musical de quatre notes comporte en plus une septième.

Par exemple : *do, mi, sol, si^b*.

En harmonie tonale, un accord de septième de dominante avec fondamentale est composé d'un accord parfait majeur et d'une septième mineure.

L'intervalle d'une octave est divisé en six tons ou douze demi-tons. Tous les demi-tons sont égaux et correspondent à une multiplication de la fréquence de la note par la même valeur.

A partir de la fréquence de vibration de l'élément de commande 2, on détermine donc les deux ou trois autres fréquences du retour sonore et/ou haptique qui permettent de définir un accord musical.

La formule utilisée peut être :

$$f = 55 \times 2^{octave + \frac{demiton - 9}{12}}$$

Où octave et demiton sont des nombres entiers correspondant à la note de *do* (demiton=0) à *si* (demiton =11) et où il est communément admis que le *la^3* est à 440Hz.

Le tableau en figure 2 donne les fréquences des notes dans l'octave du *la* de référence, (octave 3). Il faut approximativement multiplier par deux pour une octave au-dessus et les diviser par deux pour une octave en dessous.

## Revendications

1. Interface de commande (1) à retour haptique pour véhicule automobile comportant :

    - un élément de commande (2), et
    - une unité de retour haptique (3) configurée pour faire vibrer l'élément de commande (2) en réponse à un contact de l'élément de commande (2),

    **caractérisée en ce que** :

    - l'unité de retour haptique (3) est configurée pour générer au moins trois fréquences successivement, ou
    - une fréquence du retour haptique générée par l'unité de retour haptique (3) est associée :

        - à au moins deux fréquences d'un retour sonore émises par une unité de retour sonore (4) de l'interface de commande (1), ou
        - à au moins une autre fréquence du retour haptique générée par l'unité de retour haptique (3) et à au moins une fréquence d'un retour sonore émise par une unité de retour sonore (4) de l'interface de commande (1),

de manière que l'ensemble des au moins trois fréquences définisse un accord musical.

**2.** Interface de commande (1) à retour haptique selon la revendication 1, **caractérisée en ce que** les au moins trois fréquences sont émises simultanément.

**3.** Interface de commande (1) à retour haptique selon la revendication 1, **caractérisée en ce que** les au moins trois fréquences sont émises séquentiellement.

**4.** Interface de commande (1) selon l'une des revendications précédentes, **caractérisée en ce que** les fréquences de l'accord musical définissent une note fondamentale, une tierce et une quinte.

**5.** Interface de commande (1) selon l'une des revendications précédentes, **caractérisé en ce qu'**un premier rapport entre deux fréquences est compris entre 1,1 et 1,3.

**6.** Interface de commande (1) selon l'une des revendications précédentes, **caractérisé en ce qu'**un deuxième rapport entre deux fréquences est compris entre 1,4 et 1,6.

**7.** Interface de commande (1) selon l'une des revendications précédentes, **caractérisée en ce que** l'élément de commande (2) est un écran tactile ou un pavé tactile.

**8.** Procédé de commande d'une interface de commande (1) à retour haptique pour véhicule automobile comportant un élément de commande (2) qui vibre en réponse à un contact de l'élément de commande (2), **caractérisé en ce que** :

   - on fait vibrer l'élément de commande (2) selon au moins trois fréquences successives, ou
   - on fait vibrer l'élément de commande (2) selon une fréquence associée à au moins deux fréquences d'un retour sonore émises par une unité de retour sonore (4) de l'interface de commande (1), ou
   - on fait vibrer l'élément de commande (2) selon au moins deux fréquences associées à au moins une fréquence d'un retour sonore émise par une unité de retour sonore (4) de l'interface de commande (1),

de manière que l'ensemble des au moins trois fréquences définisse un accord musical.

## Fig.1

## Fréquence des notes

| ½ton | note | fréquence | Δf/f |
|---|---|---|---|
| 0 | do | 261,6 Hz | 1 |
| 1 | do# / ré♭ | 277,2 Hz | 1,06 |
| 2 | ré | 293,7 Hz | 1,12 (≈ 9/8) |
| 3 | ré# / mi♭ | 311,1 Hz | 1,19 |
| 4 | mi | 329,6 Hz | 1,26 (≈ 5/4) |
| 5 | fa | 349,2 Hz | 1,33 (≈ 4/3) |
| 6 | la# / sol♭ | 370,0 Hz | 1,41 |
| 7 | sol | 392,0 Hz | 1,5 (≈ 3/2) |
| 8 | sol# / la♭ | 415,3 Hz | 1,59 |
| 9 | **la** | **440 Hz** | 1,68 |
| 10 | la# /si♭ | 466,2 Hz | 1,78 |
| 11 | si | 493,9 Hz | 1,89 |
| 12 | do | 523,2 Hz | 2 (octave) |

## Fig.2

Europäisches
Patentamt

European
Patent Office

Office européen
des brevets

**RAPPORT DE RECHERCHE EUROPEENNE**

Numéro de la demande

EP 16 18 2039

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 717 150 A2 (TOYOTA ENG & MFG NORTH AMERICA [US]) 9 avril 2014 (2014-04-09) * alinéas [0021], [0025] - [0030], [0048]; figure 2 * ----- | 1-8 | INV. G06F3/01 G06F3/16 B60K35/00 B60K37/06 B60W50/16 |
| X | US 2014/292706 A1 (HUNT JOHN MILES [US] ET AL) 2 octobre 2014 (2014-10-02) * alinéas [0014] - [0017], [0029] - [0030] * ----- | 1-8 | |

**DOMAINES TECHNIQUES RECHERCHES (IPC)**

G06F
B60K
B60W

Le présent rapport a été établi pour toutes les revendications

| Lieu de la recherche | Date d'achèvement de la recherche | Examinateur |
|---|---|---|
| Munich | 18 novembre 2016 | Veaux, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 16 18 2039

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2016

| Document brevet cité au rapport de recherche | | Date de publication | Membre(s) de la famille de brevet(s) | | Date de publication |
|---|---|---|---|---|---|
| EP 2717150 | A2 | 09-04-2014 | EP 2717150 A2<br>JP 2014075130 A<br>US 2014092032 A1 | | 09-04-2014<br>24-04-2014<br>03-04-2014 |
| US 2014292706 | A1 | 02-10-2014 | AUCUN | | |

EPO FORM P0460

Pour tout renseignement concernant cette annexe : voir Journal Officiel de l'Office européen des brevets, No.12/82